# EUROPÄISCHE PATENTANMELDUNG

(11) **EP 4 321 360 A1**
(43) Veröffentlichungstag der Anmeldung: **14.02.2024**
(21) Anmeldenummer: 22189312.6
(22) Anmeldetag: 08.08.2022
(51) Int. Cl.: B60J 1/16

(54) **FENSTERKONSTRUKTION FÜR EIN WOHN- BZW. REISEMOBIL**

(71) Anmelder: Beck, Georg, 45731 Waltrop (DE); Penner, Johann, 45731 Waltrop (DE)
(72) Erfinder: Beck, Georg, 45731 Waltrop (DE); Penner, Johann, 45731 Waltrop (DE)
(74) Vertreter: Weisbrodt, Bernd

(57) **Zusammenfassung**

Die vorliegende Erfindung betrifft eine Fensterkonstruktion (1) für ein Wohn- bzw. Reisemobil, umfassend: eine Hauptfläche (2) mit einer in einen Innenraum des Wohn- bzw. Reisemobils richtbaren Innenseite (2a) und einer dieser gegenüberliegenden Außenseite (2b), eine mit der Innenseite (2a) der Hauptfläche (2) verbundene und eine in der Hauptfläche (2) vorgesehene Öffnung (3) zumindest teilweise umschließende Rahmenkonstruktion (4), eine innerhalb der Rahmenkonstruktion (4) mittels erster Führungsschienen (5a, 5b) beweglich angeordnete Fensterscheibe (6), und ein innerhalb der Rahmenkonstruktion (4) mittels zweiter Führungsschienen (7a, 7b) beweglich angeordnetes Insektenschutzgitter (8), wobei die beweglich angeordnete Fensterscheibe (6) und das beweglich angeordnete Insektenschutzgitter (8) dazu eingerichtet sind, die in der Hauptfläche (2) vorgesehene Öffnung (3) zu verschließen.

## Beschreibung

Die vorliegende Erfindung betrifft eine Fensterkonstruktion für ein Wohn- bzw. Reisemobil.

Ein Wohn- bzw. Reisemobil im Sinne der vorliegenden Erfindung ist ein Kraftfahrzeug mit einer zum Wohnen geeigneten Inneneinrichtung, welche häufig insbesondere der eines Wohnwagens ähnelt. Wohn- bzw. Reisemobile werden dabei als Freizeitfahrzeuge zum Camping und/oder für Urlaube mit wechselnden Stand- und/oder Erlebnisorten eingesetzt oder beispielsweise von Geschäftsreisenden wie Handelsvertretern, Montagearbeitern oder dergleichen zum Übernachten oder als mobiles Büro an wechselnden Arbeitsorten verwendet.

Mit Wohn- bzw. Reisemobil wird ein bewohnbares Fahrzeug (Essen zubereiten, Schlafen, ggfs. mit Dusche und/oder Toilette) bezeichnet, dessen Schwerpunkt jedoch auf dem Reisen, also dem Fahren bzw. Standortswechseln, liegt. In aller Regel sind es ausgebaute Kleinbusse und/oder Kastenwagen, weshalb diese Fahrzeuge auch oft als Campingbus oder auch übergreifend als Camper bezeichnet werden. Heutzutage werden in Deutschland die Begriffe Reisemobil bzw. Wohnmobil jedoch synonym verwendet, wobei in Herstellerkatalogen und Fachzeitschriften meist von Reisemobil, umgangssprachlich jedoch überwiegend von Wohnmobil - und auch von Camper oder Campermobil - gesprochen wird. Reise- bzw. Wohnmobile im ursprünglichen Sinne werden unter Kastenwagen behandelt.

Zulassungstechnisch ist diese Gruppe von Fahrzeugen eine eigene Fahrzeugart und wird in den Zulassungsbescheinigungen, sofern eine neue EU-Typgenehmigung vorliegt, einheitlich als Wohnmobil bezeichnet; frühere Bezeichnungen wie So.-Kfz für sonstiges Kfz fallen damit weg bzw. sind entfallen.

Aus dem Stand der Technik sind Fenster für Wohn- bzw. Reisemobile bekannt, welche einen Luftaustausch zwischen dem Wohn- bzw. Reisemobil und der Umgebung ermöglichen. Dabei wird prinzipiell zwischen so genannten Ausstellfenstern und Schiebefenstern unterschieden.

Bei Ausstellfenstern kann vorgesehen sein, dass diese zusätzlich einen Insektenschutz und ein Verdunkelungsrollo umfassen. Nachteilig an derartigen Fenstern ist neben dem aufgrund der Öffnungsmechanik auf der Außenseite des Reisemobils existierenden Hindernis, dass Insektenschutz und Rollo eine mittels einer vom Fenster abweichenden Öffnungsmechanik versehen sind, woraus Fehlbedienungen resultieren. Zudem sind derartige Lösungen weniger robust.

Vor diesem Hintergrund liegt der vorliegenden Erfindung die Aufgabe zugrunde, eine Lösung bereitzustellen, welche die vorgenannten Nachteile ausräumt und eine Fensterkonstruktion bereitstellt, die nicht nur ein an der Außenseite des Wohn- bzw. Reisemobils existierendes Hindernis vermeidet, sondern eine vereinfachte Bedienbarkeit sowie eine höhere Robustheit aufweist.

Erfindungsgemäß wird diese Aufgabe gelöst durch eine Fensterkonstruktion für ein Wohn- bzw. Reisemobil, umfassend: eine Hauptfläche mit einer in einen Innenraum des Reisemobils richtbaren Innenseite und einer dieser gegenüberliegenden Außenseite, eine mit der Innenseite der Hauptfläche verbundene und eine in der Hauptfläche vorgesehene Öffnung zumindest teilweise umschließende Rahmenkonstruktion, eine innerhalb der Rahmenkonstruktion mittels erster Führungsschienen beweglich angeordnete Fensterscheibe, und ein innerhalb der Rahmenkonstruktion mittels zweiter Führungsschienen beweglich angeordnetes Insektenschutzgitter, wobei die beweglich angeordnete Fensterscheibe und das beweglich angeordnete Insektenschutzgitter dazu eingerichtet sind, die in der Hauptfläche vorgesehene Öffnung zu verschließen.

Vorteilhafterweise umfasst die Fensterkonstruktion ein Verschlusselement, welches zur Blockierung einer Bewegung der Fensterscheibe und zur Blockierung einer Bewegung des Insektenschutzgitters eingerichtet ist. Damit ist es auf einfache Art und Weise möglich, ein Öffnen der Fensterkonstruktion von außerhalb des Wohn- bzw. Reisemobils zu verhindern

Vorzugsweise ist das Verschlusselement schwenkbar an der Rahmenkonstruktion angeordnet. Dies ist insbesondere von Vorteil, da aufgrund der ohnehin bereits im Innenraum des Wohn- bzw. Reisemobils vorhandenen Rahmenkonstruktion der Schließmechanismus auf einfache Art und Weise realisiert werden kann.

Gemäß einer bevorzugten Ausgestaltung ist das Verschlusselement an einem unteren Rand der Rahmenkonstruktion angeordnet. Hierdurch wird eine einfache Bedienbarkeit vom Innenraum des Wohn- bzw. Reisemobils aus gewährleistet.

Vorteilhafterweise ist das Verschlusselement im blockierten Zustand benachbart zu einer seitlichen Außenkante der beweglich angeordneten Fensterscheibe und zu einer seitlichen Außenkante des Insektenschutzgitters angeordnet. Durch diese Anordnung keine eine Bewegung von Fensterscheibe und Insektenschutzgitter in horizontaler Richtung nahezu ausgeschlossen werden, ohne dass es hierfür einer komplexen Konstruktion bedarf.

Vorzugsweise umfasst die Fensterkonstruktion ferner eine an der beweglich angeordneten Fensterscheibe vorgesehene, vorzugsweise vertikal auf der Fensterscheibe verlaufende, Griffleiste. Mittels einer solchen Griffleiste kann ein sich im Innenraum des Wohn- bzw. Reisemobils aufhaltender Nutzer die Fensterscheibe, welche im Vergleich zum Insektenschutzgitter ein höheres Eigengewicht aufweist, leichter öffnen.

Gemäß einer bevorzugten Ausgestaltung ist das Insektenschutzgitter integral geformt, insbesondere als Lochplatte mit einem ungelochten Randbereich. Eine derartige Ausgestaltung verbessert die Robustheit der gesamten Konstruktion weiter, insbesondere da Beschädigungen am Insektenschutzgitter, im Vergleich zu konventionellen Insektenschutzgittern, weniger leicht auftreten können.

Vorteilhafterweise umfasst das Insektenschutzgitter einen umlaufenden Rahmen und ein Gitternetz. Dadurch wird es ermöglicht, dass eine stabile horizontale Verschiebebewegung des Insektenschutzgitters beibehalten werden kann und dennoch ein Schutz vor Insekten gegeben ist.

Vorzugsweise weist der umlaufende Rahmen des Insektenschutzgitters eine als Griffmulde fungierende Aussparung auf. Dies ermöglicht ein besseres Öffnen und Schließen des Insektenschutzgitters, ohne dabei die Funktion der Fensterscheibe zu beeinflussen oder Platz im Innenraum des Wohn- bzw. Reisemobils zu beanspruchen.

Gemäß einer bevorzugten Ausgestaltung sind die ersten Führungsschienen und die zweiten Führungsschienen jeweils paarweise angeordnet an einer Oberseite und an einer Unterseite der Rahmenkonstruktion vorgesehen. Die jeweils paarweise Anordnung der Führungsschienen ermöglicht eine einfache und platzsparende Konstruktion, welche dennoch robust ist.

Vorteilhafterweise greift eine obere Außenkante der Fensterscheibe in die an der Oberseite angeordnete erste Führungsschiene, eine untere Außenkante der Fensterscheibe in die an der Unterseite angeordnete erste Führungsschiene, eine obere Außenkante des Insektenschutzgitters in die an der Oberseite angeordnete zweite Führungsschiene und eine untere Außenkante des Insektenschutzgitters in die an der Unterseite angeordnete zweite Führungsschiene ein. Mittels dieser Konstruktion kann eine gleichmäßige Verschiebebewegung von Fensterscheibe und Insektenschutzgitter ermöglicht werden.

Vorzugsweise umfasst die Fensterkonstruktion eine in einem seitlichen Randbereich der in der Hauptfläche vorgesehenen Öffnung angeordnete und in Richtung der Innenseite der Hauptfläche gerichtete Dichtung. Diese dient dazu, einen Luftabschluss des Wohn- bzw. Reisemobils nach außen hin zu realisieren, so dass keine (kalte) Außenluft zwischen der beweglich angeordneten Fensterscheibe und der Hauptfläche in das Wohn- bzw. Reisemobil dringen kann.

Gemäß einer bevorzugten Ausgestaltung ist die Rahmenkonstruktion im Wesentlichen U-förmig ausgebildet. Eine solche U-förmige Ausgestaltung ermöglicht es, dass Fensterscheibe und Insektenschutzgitter nach oben und nach unten hin sowie in Richtung der Seite, zu welcher selbige zu schließen sind, einen Abschluss bilden, so dass von außerhalb des Wohn- bzw. Reisemobils insbesondere kein Regen in das Innere desselben eintreten kann.

Vorteilhafterweise erstreckt sich die Rahmenkonstruktion in horizontaler Richtung über wenigstens 70% der Breite der Hauptfläche, insbesondere im Bereich von 70% bis 90% der Breite. Dadurch wird unter Gewährleistung einer ausreichenden Stabilität der Gesamtkonstruktion eine möglichst große Öffnungsmöglichkeit geschaffen.

Vorzugsweise ist die Hauptfläche und/oder die Fensterscheibe eine Scheibe, insbesondere eine Glasscheibe, wobei vorzugsweise die als Hauptfläche bzw. die als Fensterscheibe vorgesehene Glasscheibe aus gehärtetem bzw. vorgespanntem Glas ausgebildet ist, besonders bevorzugt ein Einscheiben-Sicherheitsglas (ESG) ist, insbesondere mit Zulassung bzw. Eignung für sogenannte Autoseitenscheiben. Eine derartige Ausgestaltung ermöglicht einen einfachen Austausch bestehender Scheiben an Fahrzeugen, welche zu einem Wohn- bzw. Reisemobil umgerüstet werden.

Weitere Einzelheiten, Merkmale und Vorteile der Erfindung werden nachfolgend anhand der in den Figuren der Zeichnungen dargestellten Ausführungsbeispiele näher erläutert.

Dabei zeigen:
- Fig. 1: in einer perspektivischen Ansicht ein Ausführungsbeispiel einer erfindungsgemäßen Fensterkonstruktion in ungeöffnetem Zustand, betrachtet von einem Innenraum eines Wohn- bzw. Reisemobils aus;
- Fig. 2: in einer Draufsicht ein Ausführungsbeispiel einer erfindungsgemäßen Fensterkonstruktion in geöffnetem Zustand, betrachtet von einem Innenraum eines Wohn- bzw. Reisemobils aus;
- Fig. 3: in einer Draufsicht ein Ausführungsbeispiel einer erfindungsgemäßen Fensterkonstruktion in geöffnetem Zustand, betrachtet von außerhalb eines Wohn- bzw. Reisemobils;
- Fig. 4: in einer perspektivischen Detailansicht ein Ausführungsbeispiel eines Verschlusselements der erfindungsgemäßen Fensterkonstruktion im blockierten Zustand; und
- Fig. 5: in einer perspektivischen Detailansicht ein Ausführungsbeispiel eines Verschlusselements der erfindungsgemäßen Fensterkonstruktion im geöffneten Zustand.

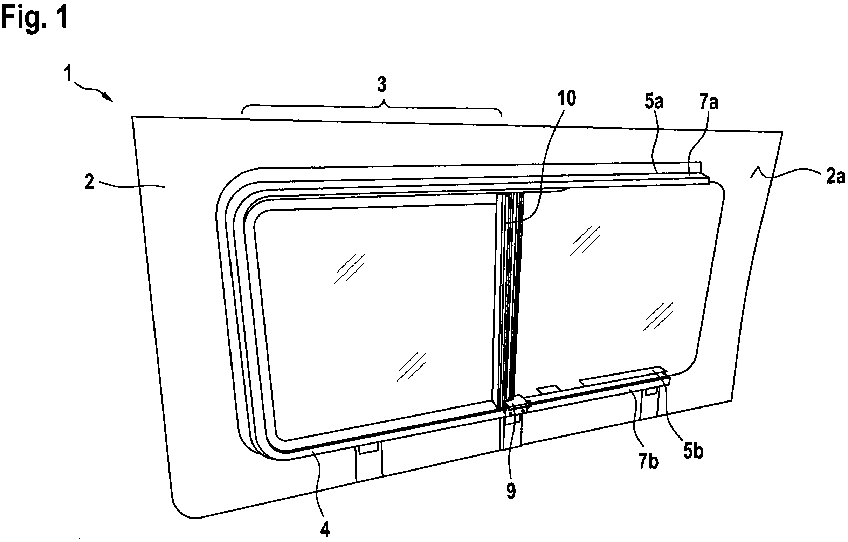

Fig. 1 zeigt in einer perspektivischen Ansicht ein Ausführungsbeispiel einer erfindungsgemäßen Fensterkonstruktion 1 in ungeöffnetem Zustand. Die Fensterkonstruktion 1 weist eine Hauptfläche 2, auf, von welcher in Fig. 1 die von einem Innenraum des Wohn- bzw. Reisemobils sichtbare Innenseite 2a zu sehen ist. Auf der Innenseite 2a der Hauptfläche 2 ist eine Rahmenkonstruktion 4 vorgesehen, welche mit der Hauptfläche 2 fest verbunden ist. Die Rahmenkonstruktion 4 umschließt dabei eine in der Hauptfläche 2 vorgesehene Öffnung 3, vorliegend gegeben im linken Teil der Hauptfläche 2, zumindest teilweise. Die Hauptfläche 2 ist vorliegend insbesondere ein Einscheiben-Sicherheitsglas (ESG), insbesondere mit Zulassung bzw. Eignung für sogenannte Autoseitenscheiben.

Die Rahmenkonstruktion 4 weist ferner eine obere erste Führungsschiene 5a und eine untere erste Führungsschiene 5b auf, wobei eine obere Außenkante einer Fensterscheibe 6 in die an der Oberseite angeordnete erste Führungsschiene 5a eingreift und eine untere Außenkante der Fensterscheibe 6 in die an der Unterseite angeordnete erste Führungsschiene 5b eingreift. Die Fensterscheibe 6 ist vorliegend insbesondere ein Einscheiben-Sicherheitsglas (ESG), insbesondere mit Zulassung bzw. Eignung für sogenannte Autoseitenscheiben.

Ferner weist die Rahmenkonstruktion 4 eine obere zweite Führungsschiene 7a und eine untere zweite Führungsschiene 7b auf, wobei eine obere Außenkante eines Insektenschutzgitters 8 in die an der Oberseite angeordnete zweite Führungsschiene 7a eingreift und eine untere Außenkante des Insektenschutzgitters 8 in die an der Unterseite angeordnete zweite Führungsschiene 7b eingreift. Demnach sind die ersten und zweiten Führungsschienen 5a/5b bzw. 7a/7b jeweils paarweise angeordnet an einer Oberseite und an einer Unterseite der Rahmenkonstruktion 4 vorgesehen.

Die Fensterscheibe 6 ist innerhalb der Rahmenkonstruktion 4 mittels der ersten Führungsschienen 5a/5b beweglich angeordnet. Das Insektenschutzgitter 8 ist innerhalb der Rahmenkonstruktion 4 hingegen mittels der zweiten Führungsschienen 7a/7b beweglich angeordnet. Demnach sind die beweglich angeordnete Fensterscheibe 6 und das beweglich angeordnete Insektenschutzgitter 8 dazu eingerichtet, die in der Hauptfläche 2 vorgesehene Öffnung 3 zu verschließen.

Des Weiteren ist in Fig. 1 ein Verschlusselement 9 gezeigt, welches zur Blockierung einer Bewegung der Fensterscheibe 6 und zur Blockierung einer Bewegung des Insektenschutzgitters 8 eingerichtet ist. Vorliegend ist das Verschlusselement 9 schwenkbar an der Rahmenkonstruktion 4 angeordnet.

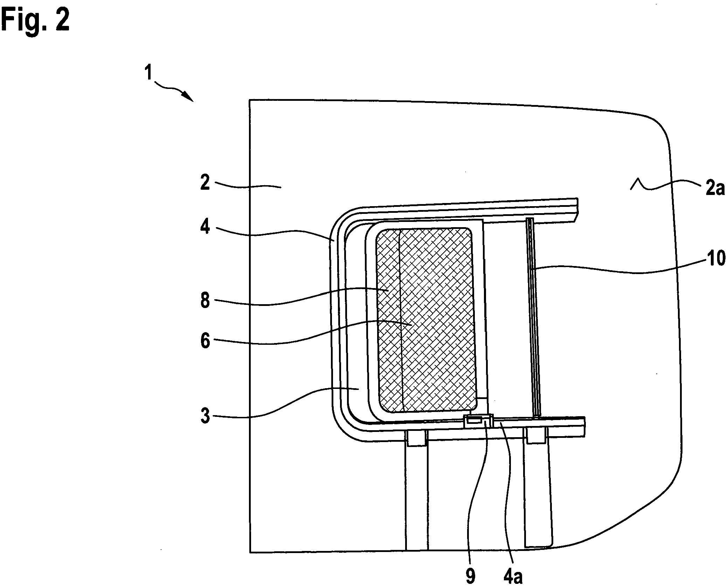

Fig. 2 zeigt in einer Draufsicht ein Ausführungsbeispiel einer erfindungsgemäßen Fensterkonstruktion 1 in geöffnetem Zustand. Die Hauptfläche 2 ist vorliegend ebenfalls insbesondere ein Einscheiben-Sicherheitsglas (ESG), insbesondere mit Zulassung bzw. Eignung für sogenannte Autoseitenscheiben. Die Fensterscheibe 6 ist vorliegend insbesondere ein Einscheiben-Sicherheitsglas (ESG), insbesondere mit Zulassung bzw. Eignung für sogenannte Autoseitenscheiben.

Das am unteren Rand 4a der Rahmenkonstruktion 4 angeordnete Verschlusselement 9 ist in Fig. 2 nach unten geschwenkt, wodurch eine Blockierung einer Bewegung der Fensterscheibe 6 und eine Blockierung einer Bewegung des Insektenschutzgitters 8 aufgehoben ist.

Aufgrund dessen ist es einem Nutzer ermöglicht, die Fensterscheibe 6 und/oder das Insektenschutzgitter 8 in horizontaler Richtung, d.h. vorliegend nach rechts, zu verschieben, um die Öffnung 3 freizugeben. Zum Öffnen der Fensterscheibe 6 kann der Nutzer vorliegend eine an der beweglich angeordneten Fensterscheibe 6 vorgesehene Griffleiste 10 verwenden. Zum Öffnen des Insektenschutzgitters 6 kann vorgesehen sein, dass dessen umlaufender Rahmen eine als Griffmulde fungierende Aussparung aufweist (nicht dargestellt), in welche ein Nutzer hineingreifen kann.

Vorliegend kann ein Nutzer die Fensterscheibe 6 und das Insektenschutzgitter 8 unabhängig voneinander öffnen, d.h. ein Öffnen der Fensterscheibe 6 ist möglich, ohne dass zuvor das Insektenschutzgitter 8 geöffnet, d.h. beiseite geschoben, werden muss. Alternativ kann auch nur das Insektenschutzgitter 8 geöffnet werden, um beispielsweise einen erhöhten Lichteintritt in den Innenraum des Reisemobils zu ermöglichen. Selbstverständlich können auch Fensterscheibe 6 und Insektenschutzgitter 8 geöffnet werden, um ein Lüften des Reisemobils zu ermöglichen.

Anhand von Fig. 2 ist ferner erkennbar, dass wobei die Rahmenkonstruktion 4 im Wesentlichen U-förmig ausgebildet ist, wobei die Fensterscheibe 6 und das Insektenschutzgitter 8 nach oben und nach unten hin sowie nach links hin einen Abschluss bilden, wodurch von außerhalb des Wohn- bzw. Reisemobils beispielsweise kein Regen mehr in das Innere desselben eintreten kann.

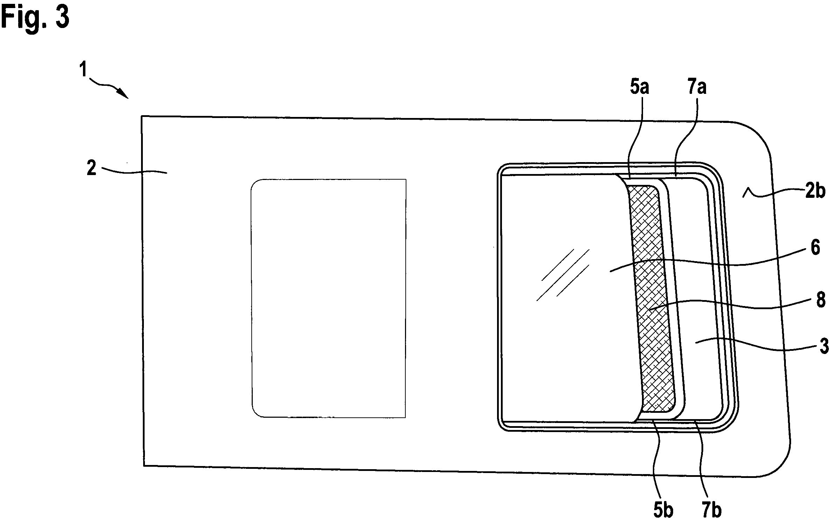

Fig. 3 zeigt in einer Draufsicht ein Ausführungsbeispiel einer erfindungsgemäßen Fensterkonstruktion 1 in geöffnetem Zustand. Im Gegensatz zu den Figuren 1 und 2 ist die Fensterkonstruktion 1 nunmehr in einer Außenansicht, d.h. von außerhalb des Wohn- bzw. Reisemobils, dargestellt, so dass eine Außenseite 2b der Hauptfläche 2 sichtbar ist. Die Hauptfläche 2 ist vorliegend ebenfalls insbesondere ein Einscheiben-Sicherheitsglas (ESG), insbesondere mit Zulassung bzw. Eignung für sogenannte Autoseitenscheiben. Die Fensterscheibe 6 ist vorliegend insbesondere ein Einscheiben-Sicherheitsglas (ESG), insbesondere mit Zulassung bzw. Eignung für sogenannte Autoseitenscheiben. Anhand von Fig. 3 ist gut erkennbar, dass die vorgeschlagene Lösung kein Hindernis an der Außenseite 2b des Wohn- bzw. Reisemobils darstellen kann, da keinerlei Komponenten derselben über eine Oberfläche der Hauptfläche 2 hinausragen.

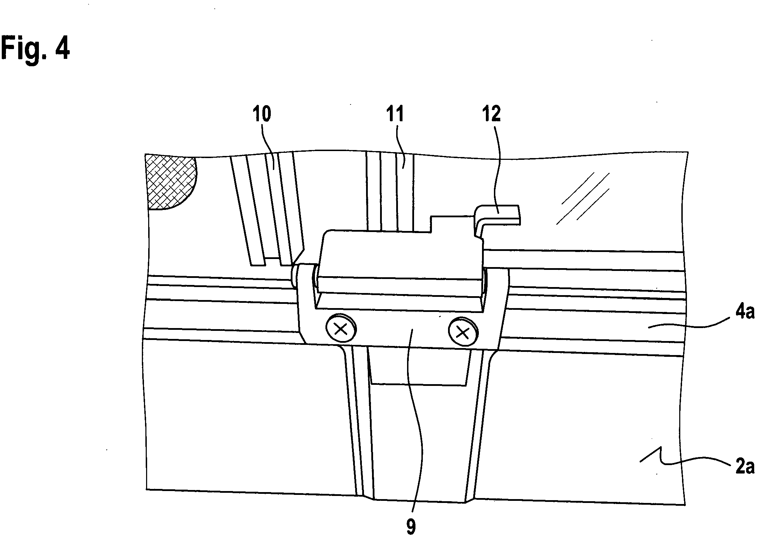

Fig. 4 zeigt in einer perspektivischen Detailansicht ein Ausführungsbeispiel eines Verschlusselements 9 der erfindungsgemäßen Fensterkonstruktion im blockierten Zustand. Das Verschlusselement 9 ist vorliegend schwenkbar an der Rahmenkonstruktion 4 angeordnet, nämlich an einem unteren Rand 4a selbiger. Zum Vereinfachten Betätigen des Verschlusselements 9 ist ein Bedienelement 12 vorgesehen. Zwecks Verbindung von Verschlusselement 9 und Rahmenkonstruktion 4 sind in diesem Ausführungsbeispiel zwei Schrauben vorgesehen, wobei andere Verbindungsmittel gleichermaßen verwendet werden können.

Wie anhand von Fig. 4 erkennbar, ist das Verschlusselement 9 im blockierten Zustand benachbart zu einer seitlichen Außenkante der beweglich angeordneten Fensterscheibe 6 sowie zu einer seitlichen Außenkante des Insektenschutzgitters 8 angeordnet. Da die Fensterscheibe 6 eine größere Breite aufweist als das Insektenschutzgitter 8 weist das Verschlusselement 9 hierzu eine stufenförmige Ausbildung, d.h. einen Versatz, auf. Der näher an der Außenseite 2b liegende Bereich des schwenkbaren Teils des Verschlusselements 9 blockiert somit die Fensterscheibe 6, der näher an der Innenseite 2a liegende Bereich des schwenkbaren Teils des Verschlusselements 9 blockiert hingegen das Insektenschutzgitter 8.

Ferner ist in Fig. 4 eine in einem seitlichen Randbereich der in der Hauptfläche 2 vorgesehenen Öffnung 3 angeordnete und in Richtung der Innenseite 2a der Hauptfläche 2 gerichtete Dichtung 11 zu sehen, welche einem Luftabschluss zwischen Hauptfläche 2 und Fensterscheibe 6 dient. Die Hauptfläche 2 ist vorliegend ebenfalls insbesondere ein Einscheiben-Sicherheitsglas (ESG), insbesondere mit Zulassung bzw. Eignung für sogenannte Autoseitenscheiben. Die Fensterscheibe 6 ist vorliegend insbesondere ein Einscheiben-Sicherheitsglas (ESG), insbesondere mit Zulassung bzw. Eignung für sogenannte Autoseitenscheiben.

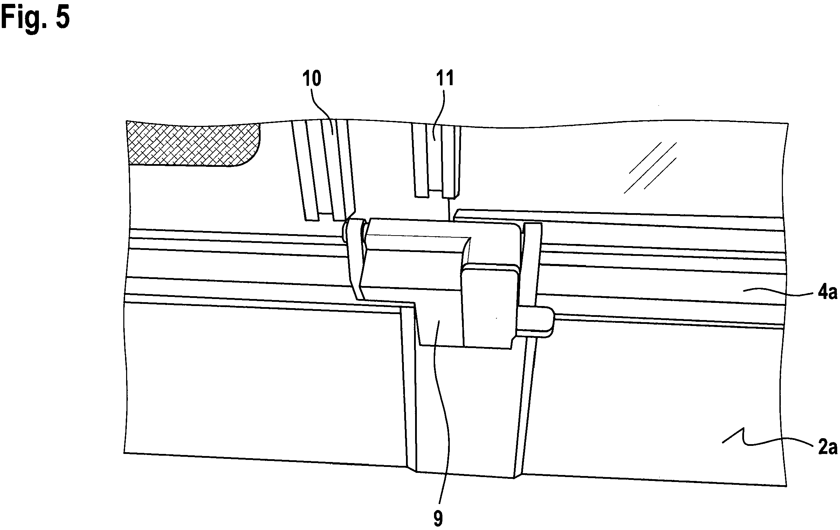

Fig. 5 zeigt in einer perspektivischen Detailansicht ein Ausführungsbeispiel eines Verschlusselements der erfindungsgemäßen Fensterkonstruktion im geöffneten Zustand.

Das Verschlusselement 9 ist nunmehr in Richtung des Innenraums des Wohn- bzw. Reisemobils geschwenkt, so dass in einem solchen geöffneten bzw. unblockierten Zustand eine horizontale Bewegung von Fensterscheibe 6 und Insektenschutzgitter 8 ermöglicht ist. Fensterscheibe 6 und/oder Insektenschutzgitter 8 können von einem Nutzer entsprechend nach rechts geschoben werden. Die Hauptfläche 2 ist vorliegend ebenfalls insbesondere ein Einscheiben-Sicherheitsglas (ESG), insbesondere mit Zulassung bzw. Eignung für sogenannte Autoseitenscheiben. Die Fensterscheibe 6 ist vorliegend insbesondere ein Einscheiben-Sicherheitsglas (ESG), insbesondere mit Zulassung bzw. Eignung für sogenannte Autoseitenscheiben.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1: Fensterkonstruktion
- 2: Hauptfläche (Einscheiben-Sicherheitsglas (ESG), insbesondere mit Zulassung bzw. Eignung für sogenannte Autoseitenscheiben)
- 2a: Innenseite der Hauptfläche
- 2b: Außenseite der Hauptfläche
- 3: Öffnung
- 4: Rahmenkonstruktion
- 4a: Unterer Rand der Rahmenkonstruktion
- 5a: erste Führungsschiene (oben)
- 5b: erste Führungsschiene (unten)
- 6: Fensterscheibe (Einscheiben-Sicherheitsglas (ESG), insbesondere mit Zulassung bzw. Eignung für sogenannte Autoseitenscheiben)
- 7a: zweite Führungsschiene (oben)
- 7b: zweite Führungsschiene (unten)
- 8: Insektenschutzgitter
- 9: Verschlusselement
- 10: Griffleiste
- 11: Dichtung
- 12: Bedienelement

## Patentansprüche

1. Fensterkonstruktion (1) für ein Wohn- bzw. Reisemobil, umfassend:
eine Hauptfläche (2) mit einer in einen Innenraum des Wohn- bzw. Reisemobils richtbaren Innenseite (2a) und einer dieser gegenüberliegenden Außenseite (2b),
eine mit der Innenseite (2a) der Hauptfläche (2) verbundene und eine in der Hauptfläche (2) vorgesehene Öffnung (3) zumindest teilweise umschließende Rahmenkonstruktion (4),
eine innerhalb der Rahmenkonstruktion (4) mittels erster Führungsschienen (5a, 5b) beweglich angeordnete Fensterscheibe (6), und
ein innerhalb der Rahmenkonstruktion (4) mittels zweiter Führungsschienen (7a, 7b) beweglich angeordnetes Insektenschutzgitter (8),
wobei die beweglich angeordnete Fensterscheibe (6) und das beweglich angeordnete Insektenschutzgitter (8) dazu eingerichtet sind, die in der Hauptfläche (2) vorgesehene Öffnung (3) zu verschließen.

2. Fensterkonstruktion (1) nach Anspruch 1, ferner umfassend ein Verschlusselement (9), welches zur Blockierung einer Bewegung der Fensterscheibe (6) und zur Blockierung einer Bewegung des Insektenschutzgitters (8) eingerichtet ist.

3. Fensterkonstruktion (1) nach Anspruch 2, wobei das Verschlusselement (9) schwenkbar an der Rahmenkonstruktion (4) angeordnet ist.

4. Fensterkonstruktion (1) nach Anspruch 2 oder Anspruch 3, wobei das Verschlusselement (9) an einem unteren Rand (4a) der Rahmenkonstruktion (4) angeordnet ist.

5. Fensterkonstruktion (1) nach einem der Ansprüche 2 bis 4, wobei das Verschlusselement (9) im blockierten Zustand benachbart zu einer seitlichen Außenkante der beweglich angeordneten Fensterscheibe (6) und zu einer seitlichen Außenkante des Insektenschutzgitters (8) angeordnet ist.

6. Fensterkonstruktion (1) nach einem der Ansprüche 1 bis 5, ferner umfassend eine an der beweglich angeordneten Fensterscheibe (6) vorgesehene, vorzugsweise vertikal auf der Fensterscheibe (6) verlaufende, Griffleiste (10).

7. Fensterkonstruktion (1) nach einem der Ansprüche 1 bis 6, wobei das Insektenschutzgitter (8) einen umlaufenden Rahmen und ein Gitternetz umfasst.

8. Fensterkonstruktion (1) nach Anspruch 7, wobei der umlaufende Rahmen eine als Griffmulde fungierende Aussparung aufweist.

9. Fensterkonstruktion (1) nach einem der Ansprüche 1 bis 8, wobei das Insektenschutzgitter (8) integral geformt ist, insbesondere als Lochplatte mit einem ungelochten Randbereich.

10. Fensterkonstruktion (1) nach einem der Ansprüche 1 bis 9, wobei die ersten Führungsschienen (5a, 5b) und die zweiten Führungsschienen (7a, 7b) jeweils paarweise angeordnet an einer Oberseite und an einer Unterseite der Rahmenkonstruktion (4) vorgesehen sind.

11. Fensterkonstruktion (1) nach Anspruch 10, wobei eine obere Außenkante der Fensterscheibe (6) in die an der Oberseite angeordnete erste Führungsschiene (5a) eingreift, eine untere Außenkante der Fensterscheibe (6) in die an der Unterseite angeordnete erste Führungsschiene (5b) eingreift, eine obere Außenkante des Insektenschutzgitters (8) in die an der Oberseite angeordnete zweite Führungsschiene (7a) eingreift und eine untere Außenkante des Insektenschutzgitters (8) in die an der Unterseite angeordnete zweite Führungsschiene (7b) eingreift.

12. Fensterkonstruktion (1) nach einem der Ansprüche 1 bis 11, ferner umfassend eine in einem seitlichen Randbereich der in der Hauptfläche (2) vorgesehenen Öffnung (3) angeordnete und in Richtung der Innenseite (2a) der Hauptfläche (2) gerichtete Dichtung (11).

13. Fensterkonstruktion (1) nach einem der Ansprüche 1 bis 12, wobei die Rahmenkonstruktion (4) im Wesentlichen U-förmig ausgebildet ist.

14. Fensterkonstruktion (1) nach einem der Ansprüche 1 bis 13, wobei sich die Rahmenkonstruktion (4) in horizontaler Richtung über wenigstens 70% der Breite der Hauptfläche (2) erstreckt.

15. Fensterkonstruktion (1) nach einem der Ansprüche 1 bis 14, wobei die Hauptfläche (2) und/oder die Fensterscheibe (6) eine Scheibe, insbesondere eine Glasscheibe, ist, wobei vorzugsweise die als Hauptfläche (2) bzw. die als Fensterscheibe (6) vorgesehene Glasscheibe aus gehärtetem bzw. vorgespanntem Glas ausgebildet ist, besonders bevorzugt ein Einscheiben-Sicherheitsglas (ESG) ist, insbesondere mit Zulassung bzw. Eignung für sogenannte Autoseitenscheiben.
